# EUROPEAN PATENT SPECIFICATION

(11) **EP 3 144 835 B1**
(45) Date of publication and mention of the grant of the patent: **12.08.2020**
(21) Application number: 14891977.2
(22) Date of filing: 10.10.2014
(51) Int. Cl.: G06F 21/32, G06F 1/16, G06F 1/32, G06F 21/81

(54) **FINGERPRINT RECOGNITION-BASED TERMINAL AND METHOD AND SYSTEM FOR LOGGING IN TO SAME IN STAND-BY STATE**
AUF FINGERABDRUCKSERKENNUNG BASIERENDES ENDGERÄT SOWIE VERFAHREN UND SYSTEM ZUM EINLOGGEN DARIN IM STANDBY-MODUS
TERMINAL À RECONNAISSANCE D'EMPREINTES DIGITALES ET PROCÉDÉ ET SYSTÈME POUR S'Y CONNECTER EN ÉTAT D'ATTENTE

(30) Priority: 14.05.2014 CN 201410020454
(43) Date of publication of application: 22.03.2017
(73) Proprietor: Shenzhen Goodix Technology Co., Ltd., Futian Free Trade Zone Shenzhen, Guangdong 518000 (CN)
(72) Inventor: RAN, Rui, Shenzhen Guangdong 518000 (CN); HAO, Qiyi, Shenzhen Guangdong 518000 (CN)
(74) Representative: Kraus & Weisert Patentanwälte PartGmbB
(86) International application number: PCT/CN2014/088284
(87) International publication number: WO 2015/172503

(56) References cited:
- WO-A2-2008/010899
- CN-A- 102 508 591
- CN-A- 103 745 194
- CN-A- 104 008 319
- US-A1- 2008 253 624
- US-A1- 2013 263 252

## Description

### TECHNICAL FIELD

The present invention relates to the technical field of terminal authentication and login, and in particular, relates to a terminal based fingerprint identification, and a method and system for logging into the terminal in a standby mode.

### BACKGROUND

With higher and higher requirements imposed by users on privacy on mobile phones, tablet computers and the like terminals, fingerprint identification-based login function is gradually integrated in such terminals as mobile phones and tablet computers.

Chinese patent invention with publication No. CN102833423A has disclosed a touch screen mobile phone based on fingerprint identification and a login and unlocking method thereof. The login and unlocking method includes the following steps: step 1, judging whether to set a fingerprint sample, and it is judged that a fingerprint sample needs to be set, providing a fingerprint input box on the touch screen, collecting fingerprint data input in the input box and storing the collected fingerprint data as a fingerprint sample, and otherwise, performing step 2 for verification; step 2, providing a fingerprint input box on the touch screen, collecting fingerprint data input in the input box, comparing the fingerprint data input in the fingerprint input box with a stored fingerprint sample to judge whether the fingerprint data matches with the fingerprint sample, entering the system of the mobile phone if the fingerprint data matches with the fingerprint sample, and otherwise, performing step 3; step 3, judging whether the number of verifications reaches a predetermined threshold of verifications, performing step 4 if the number of verifications reaches the predetermined threshold of verifications, and otherwise, returning to step 2 to perform a next verification again; and step 4, prompting the user to input a PIN code of the mobile phone, judging whether the PIN code input by the user is correct, entering the system of the mobile phone if the PIN code is correct, and otherwise, prohibiting to enter the system of the mobile phone.

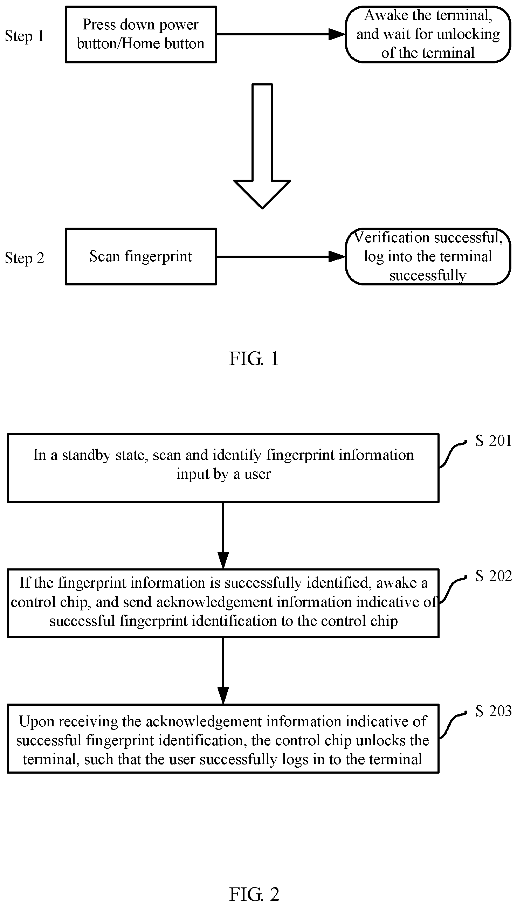

The above solution achieves a high security and is not simply cracked, and thus may effectively preventing malicious interception of information of the mobile phone owner, thereby protecting privacy of the owner. However, with respect to a terminal in a standby state, since the terminal is in a dark screen state, the terminal needs to be firstly awoken before fingerprint identification. As illustrated in FIG. 1, the awaking step includes: step 1, pressing down the power button or the Home button to awake the terminal, and waiting for unlocking of the terminal based on fingerprint; step 2, scanning a fingerprint input zone, judging whether a fingerprint is input, verifying the fingerprint information if fingerprint information is input by the user is scanned, logging in to the terminal and entering the system of the terminal if the verification is successful.

Accordingly, the traditional fingerprint revivification-based login operation needs two steps, and is thus complicated, which, to some extent, reduces user experience.

US2008/0253624A1 discloses an authentication apparatus for authenticating a fingerprint to power up an electronic device. The authentication apparatus includes a fingerprint sensor and a switch. In operation, when the switch senses pressure from a user fingertip, the switch generates a power-up command to power up the fingerprint sensor. The fingerprint sensor authenticates the fingerprint. When the authentication result is affirmative, the fingerprint sensor generates the laptop power-up command. The electronic lock of the electronic device is unlocked, and the electronic device is powered up according to the laptop power-up command. When the authentication result is negative, the fingerprint sensor is powered down.

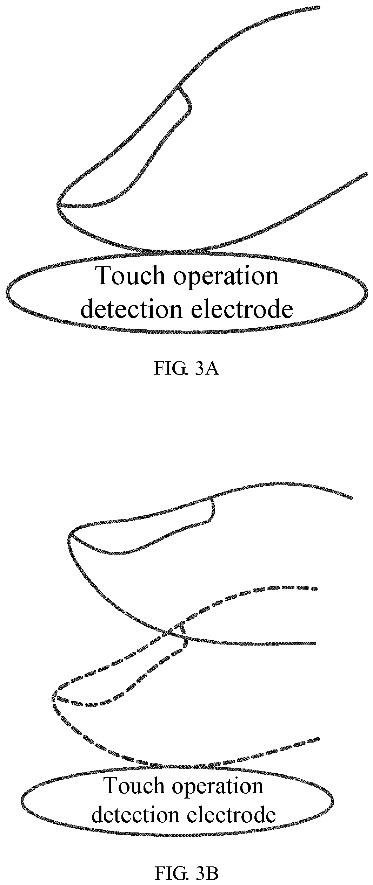

US2013/0263252A1 discloses a fingerprint scanner integrated with an operating portion of a host electronic device. Specifically, the fingerprint sensor is disposed in an operative position with respect to a mechanical switch on the host electronic device. The fingerprint sensor is configured to sense biometric characteristics of biometric object while the biometric object is operating the mechanical switch. Figs. 1-4 of Lien illustrate that a fingerprint sensor 10 is embedded in a button 16 upon which a user can place a finger 14. The button 16 is positioned underneath the fingerprint sensor 10, and attached to a mechanical-switch 18 such as the "home" button on a cell phone. A general purpose input/output (GPIO) mechanism 20 is linked to the mechanical switch 18. In operation, when the finger 14 is away from the fingerprint sensor 10, the fingerprint sensor 10 can be at least in a lower power "sleep" mode. When the finger 14 comes down on to or into the vicinity of the sensor 10 (see FIG. 2), the fingerprint scanner may still be in a sleep standby mode until the finger depresses the biometric sensor 10, and the button 16 is depressed by the sensor 10 (see FIG. 3). The actuation of the mechanical switch 18 by the sensor 10 depressing the button 16 then turns on or awakens the fingerprint scanner, e.g., via the a general purpose input/output GPIO mechanism 20 operated by the button 16.

### SUMMARY

A first technical problem to be solved by the present invention is to provide a method for logging in to a terminal based on fingerprint identification in a standby state, in order to simplify login operations for a user and thus improve user experience. The invention is defined by the independent claims. Further aspects of the invention are outlined in the dependent claims. Embodiments which do not fall within the scope of the claims do not describe part of the present invention.

An exemplary embodiment is implemented by: a method for logging in to a terminal based on fingerprint identification in a standby state. The method includes the following steps:
a fingerprint scanning and identification step: in a scanning and identification mode, scanning and identifying fingerprint information input by a user;
an awaking step: if the fingerprint information is successfully identified, awaking a primary control chip, and sending acknowledgement information indicative of successful fingerprint identification to the primary control chip; and
an unlocking step: upon receiving the acknowledgement information indicative of successful fingerprint identification, unlocking, by the primary control chip, the terminal, such that the user successfully logs in to the terminal.

Further, prior to the fingerprint scanning and identification step, the method further includes:
a touch gesture detection step: in the standby state, detecting whether the user performs a touch operation; and performing the fingerprint identification step if the user's touch operation is detected.

Further, the touch gesture detection step includes:
in the standby state, detecting whether the user performs a touch operation conforming to rules.

Still further, the touch operation conforming to rules includes a tap operation, a long-press touch operation or a short-press double-tap operation.

Still further, if no touch operation conforming to rules is detected, the terminal enters a period of sleep time and temporarily stops the touch gesture detection step.

A second technical problem to be solved by an exemplary embodiment is to provide a method for logging in to a terminal based on fingerprint identification. The method includes the following steps:
a fingerprint scanning step: upon detection of a touch operation performed by a user, entering a scanning mode to scan whether the user inputs fingerprint information;
an awaking step: if it is scanned that the user inputs fingerprint information, awaking a primary control chip and sending the scanned fingerprint information to the primary control chip; and
an unlocking step: identifying, by the primary control chip, the fingerprint information, and unlocking the terminal upon successful identification, such that the user successfully logs in to the terminal.

A third technical problem to be solved by an exemplary embodiment is to provide a system for logging in to a terminal based on fingerprint identification in a standby state. The system includes a fingerprint detection and identification module and a primary control chip.
the fingerprint detection and identification module is configured to, in a scanning and identification mode, scan and identify fingerprint information input by a user, and if the fingerprint information is successfully identified, awake the primary control chip and send acknowledgement information indicative of successful fingerprint identification to the primary control chip; and
the primary control chip is configured to, upon receiving the acknowledgement information indicative of successful fingerprint identification, unlock the terminal, such that the user successfully logs in to the terminal.

Further, the fingerprint detection and identification module is further configured to, in the standby state, detect whether the user performs a touch operation, and enter a scanning and identification mode if it is detected that the user performs a touch operation.

Further, the fingerprint detection and identification module is further configured to, in the standby state, detect whether the user performs a touch operation conforming to rules.

Still further, if no touch operation conforming to rules is detected, the fingerprint detection and identification module enters a period of sleep time and temporarily stops the touch gesture detection step.

Further, the fingerprint detection and identification module includes:
an annular emission electrode;
a fingerprint detection electrode;
an analog front-end, connected to the annular emission electrode, and configured to detect, in the standby state, whether the user performs a touch operation on the annular emission electrode; and
a fingerprint scanning and identification unit, connected to the analog front-end and the fingerprint detection electrode, and configured to, after the analog front-end detects the touch operation performed by the user, enter a scanning and identification mode to scan and identify fingerprint information input by the user via the fingerprint detection electrode, awake the primary control chip upon successful fingerprint information identification, and send acknowledgement information indicative of successful fingerprint identification to the primary control chip.

Still further, the annular emission electrode is arranged to surround the fingerprint detection electrode, and the annular emission electrode and the fingerprint detection electrode are simultaneously touchable by a finger.

A fourth technical problem to be solved by an exemplary embodiment is to provide a system for logging in to a terminal based on fingerprint identification in a standby state. The system includes a fingerprint detection and identification module and a primary control chip.
the fingerprint scanning module is configured to, in the standby state, detect whether a user performs a touch operation; upon detection of a touch operation performed by the user, enter a scanning mode to scan whether the user inputs fingerprint information; and if it is scanned that the user inputs fingerprint information, awake the primary control chip and send the scanned fingerprint information to the primary control chip; and
the primary control chip is configured to identify the fingerprint information, and unlocking the terminal upon successful identification, such that the user successfully logs in to the terminal.

A fifth technical problem to be solved by an exemplary embodiment is to provide a terminal based on fingerprint identification. The terminal includes the above described system.

The method and system for logging into a terminal based on fingerprint identification in a standby state as claimed in claims 1-8 and the terminal based on fingerprint identification as claimed in claims 9 are provided.

With the fingerprint identification technology according to an exemplary embodiment, even in a standby state, the fingerprint scanning and detection function may still be enabled; and once an input fingerprint is scanned, identification and awake actions may be triggered, thereby saving manual awaking before the scanning and identification function is enabled. In this way, simple login operations may improve user experience.

### BRIEF DESCRIPTION OF THE DRAWINGS

FIG. 1 is a schematic diagram of conventional fingerprint identification-based login;
FIG. 2 is an implementation flowchart of a method for logging in to a terminal based on fingerprint identification in a standby state according to a first embodiment of the present invention;
FIG. 3A and FIG. 3B are schematic diagram of two customized touch operations for a touch operation detection electrode according to the present invention;
FIG. 4 is a complete flowchart of the login method in FIG. 2;
FIG. 5 is an implementation flowchart of a method for logging in to a terminal based on fingerprint identification in a standby state according to a second embodiment of the present invention;
FIG. 6 is a schematic diagram of fingerprint identification-based login according to the present invention;
FIG. 7 is a schematic diagram of a system for logging in to a terminal based on fingerprint identification in a standby state according to an embodiment of the present invention;
FIG. 8 is a schematic diagram of a terminal login system based on fingerprint identification in a standby state according to the first embodiment of the present invention;
FIG. 9 is an appearance diagram of a fingerprint detection and identification module according to the present invention; and
FIG. 10 is a schematic diagram of a terminal login system based on fingerprint identification in a standby state according to the second embodiment of the present invention.

### DETAILED DESCRIPTION

In order to make the objectives, technical solutions, and advantages of the present invention clearer, the present invention is further described in detail below by reference to the embodiments and the accompanying drawings. It should be understood that the embodiments described here are only exemplary ones for illustrating the present invention, and are not intended to limit the present invention.

With the fingerprint identification technology according to the present invention, even in a standby state, the fingerprint scanning and detection function may still be enabled; and once an input fingerprint is scanned, identification and awake actions may be triggered. The entire process requires only one-step operation by a user.

FIG. 2 illustrates an implementation flowchart of a method for logging in to a terminal based on fingerprint identification in a standby state according to a first embodiment of the present invention, which is described in detail hereinafter.

In step S201, fingerprint scanning and identification is performed. Fingerprint input by a user is scanned and identified in a fingerprint scanning mode.

Considering that a great power energy is consumed when the terminal stays in the scanning and identification mode for a long time, prior to step S201, a touch gesture detection step consuming less power energy may be further set, to detect, in the standby state, whether the user performs a touch operation; if it is detected that the user performs a touch operation, step S201 is performed, and before the user's touch operation is detected, the scanning and identification mode is not enabled.

In the present invention, in the standby state of such a terminal as a mobile phone, a tablet computer and the like, a fingerprint detection and identification module enters a low power-consumption mode, which firstly enables a touch operation detection function only periodically. When it is detected that the user performs a touch operation, the fingerprint scanning and detection function is further enabled.

To prevent the mobile phone from being awoken by a misoperation by the user, the present invention specifically defines a specific touch operation gesture to be distinguished from a normal operation. Only a touch operation conforming to rules may be considered to be valid. FIG. 3A and FIG. 3B respectively illustrates a long-press touch operation and a short-press double-tap operation as examples, wherein the touch operation detection electrode may be implemented by an annular emission electrode, which is specifically described hereinafter in this specification.

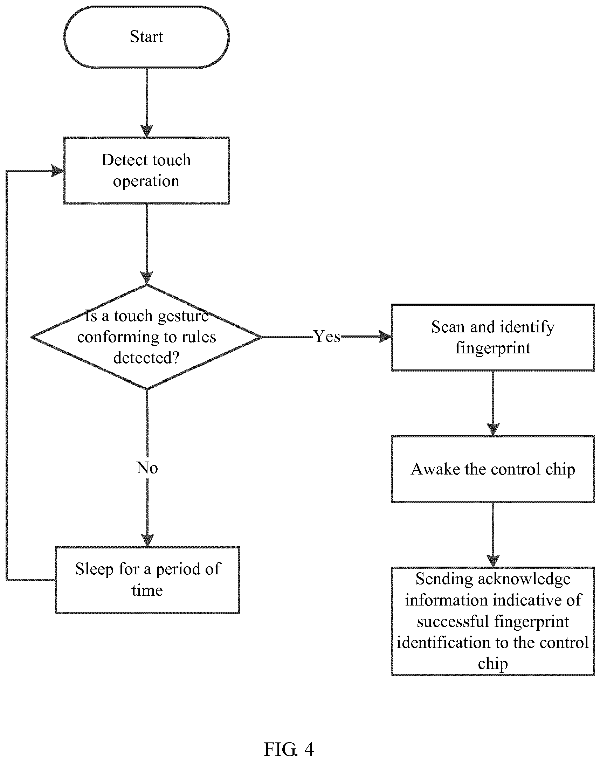

Further, if no touch operation conforming with rules is detected, the terminal enters a period of sleep time and temporarily stopping the touch gesture detection step. FIG. 4 illustrates a complete flowchart of the login method according to a first embodiment of the present invention.

In step S202, the terminal is awoken. If the fingerprint information is successfully identified, a primary control chip is awoken, and acknowledgement information indicative of successful fingerprint identification is sent to the primary control chip.

In step S203, the terminal is unlocked. Upon receiving the acknowledgment information indicative of successful fingerprint identification, the primary control chip awakes the terminal, and displays a picture indicating that the user has successfully being logged in to.

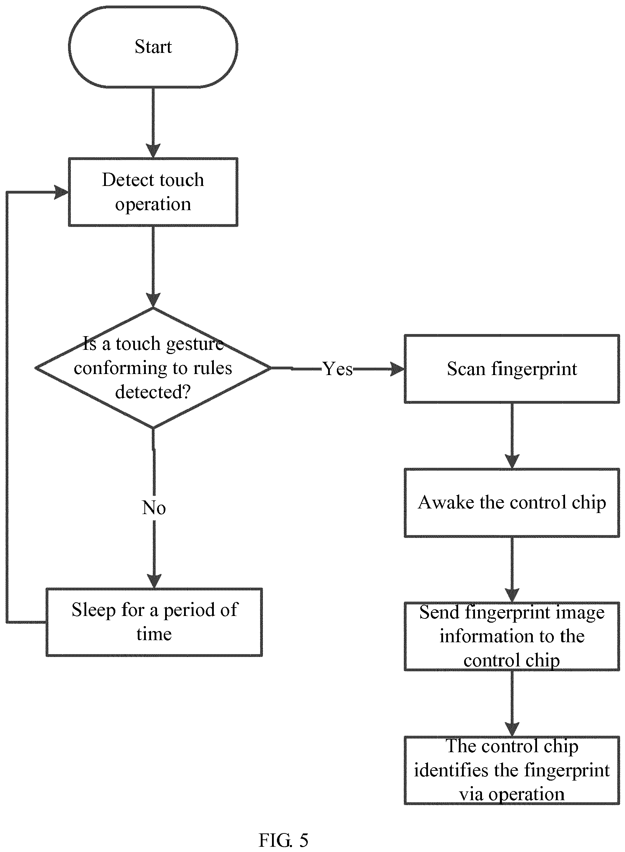

FIG. 5 illustrates an implementation flowchart of a method for logging in to a terminal based on fingerprint identification in a standby state according to a second embodiment of the present invention. Different from the first embodiment, in the second embodiment, the fingerprint image is identified by the primary control chip. Specifically, the fingerprint scanning and identification step is replaced by a fingerprint scanning step: upon detection of a touch operation performed by a user, entering a scanning mode to scan whether the user inputs fingerprint information. The awaking step in the first embodiment is alternatively: if it is scanned that the user inputs fingerprint information, awaking a primary control chip and sending the scanned fingerprint information to the primary control chip. The unlocking step in the first embodiment is alternatively: identifying, by the primary control chip, the fingerprint information, and unlocking the terminal upon successful identification, such that the user successfully logs in to the terminal.

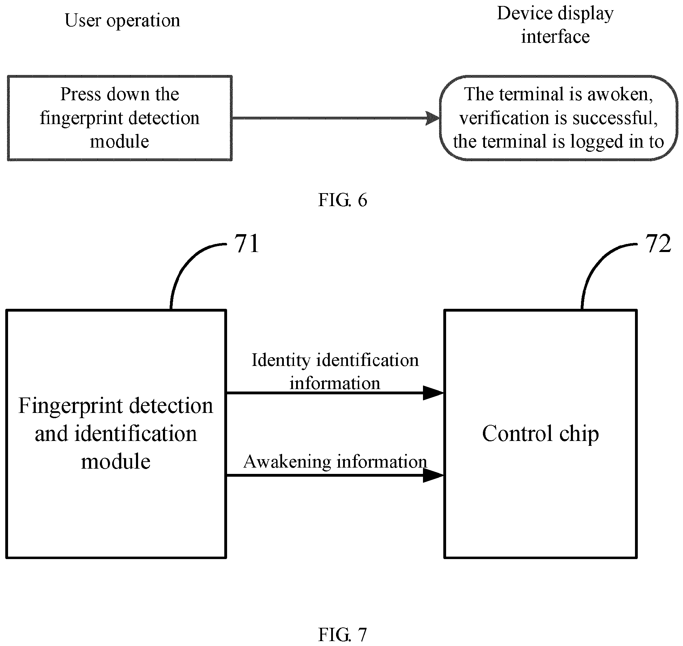

Quick login may be implemented via one-step operation according to the above two embodiments. As illustrated in FIG. 6, it is apparent that as compared with the operations illustrated in FIG. 1, operation experience to the user is greatly enhanced.

Referring to FIG. 7, a system for logging in to a terminal based on fingerprint identification in a standby state includes a fingerprint detection and identification module 71 and a primary control chip 72. The fingerprint detection and identification module 71 is configured to, in a scanning and identification mode, scan and identify fingerprint information input by a user, and if the fingerprint information is successfully identified, awake the primary control chip 72and send acknowledgement information indicative of successful fingerprint identification to the primary control chip 72. The primary control chip 72 is configured to upon receiving the acknowledgement information indicative of successful fingerprint identification, unlock the terminal, such that the user successfully logs in to the terminal.

As described above, to reduce overall power consumption, the above scanning and identification mode is enabled only when a touch operation is performed. Therefore, the fingerprint detection and identification module 71 is configured to, firstly in the standby state, detect whether the user performs a touch operation, and enter a scanning and identification mode if it is detected that the user performs a touch operation.

Further, the fingerprint detection and identification module 71, in the standby state, specifically detects whether the user performs a touch operation conforming to rules, for example, a long-press touch operation, a short-press double-tap operation or the like as illustrated in FIG. 3A and FIG. 3B.

If detecting no touch operation conforming to rules, the fingerprint detection and identification module 71 enters a period of sleep time and temporarily stops the touch gesture detection step.

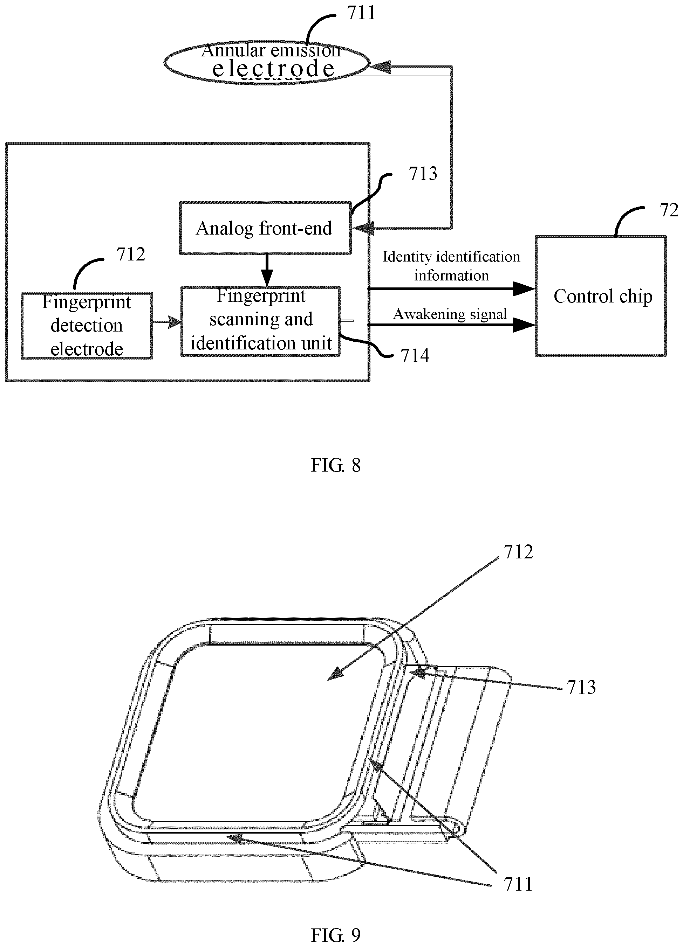

FIG. 8 illustrates a schematic diagram of a terminal login system based on fingerprint identification in a standby state according to the first embodiment of the present invention; and FIG. 9 illustrates an appearance of a fingerprint detection and identification module according to the present invention. Referring to FIG. 8 and FIG. 9, the fingerprint detection and identification module 71 includes an annular emission electrode 711, a fingerprint detection electrode 712, an analog front-end 713 and a fingerprint scanning and identification unit 714. The fingerprint detection electrode 712 may be an m x n electrode array. The analog front-end 713 is connected to the annular emission electrode 711, and configured to detect, in the standby state, whether the user performs a touch operation on the annular emission electrode 711. The fingerprint scanning and identification unit 714 is connected to the fingerprint detection electrode 712 and the analog front-end 713, and configured to, after the analog front-end 713 detects the touch operation performed by the user, enter a scanning and identification mode to scan and identify fingerprint information input by the user via the fingerprint detection electrode, awake the primary control chip upon successful fingerprint information identification, and send acknowledgement information indicative of successful fingerprint identification to the primary control chip 72.

To improve the speed of detection, scanning and identification of the fingerprint detection and identification module 71, in the present invention, the annular emission electrode 711 is arranged to surround the fingerprint detection electrode 712, and the finger may at the same time touch the annular emission electrode 711 and the fingerprint detection electrode 712. Once being touched by a finger, the analog front-end 713 and the fingerprint scanning and identification unit 714 may be enabled substantially at the same time.

As an example of the present invention, the analog front-end 713 is implemented by an operational amplifier, wherein a non-inverting input terminal of the operational amplifier is connected to a reference potential Vref, an inverting input terminal thereof is connected to the annular emission electrode 711, and an output terminal thereof is connected to the fingerprint scanning and identification unit 714; and the a capacitor C and a resistor R are parallelly arranged between the inverting input terminal and the output terminal, and the inverting input terminal is also connected to an alternating current drive source so as to drive the annular emission electrode 711. When the finger touches the annular emission electrode 711, a parasitic capacitance of the annular emission electrode 711 to the remote ground may be altered, and whether the finger touches a fingerprint sensor may be detected by means of detecting the parasitic capacitance.

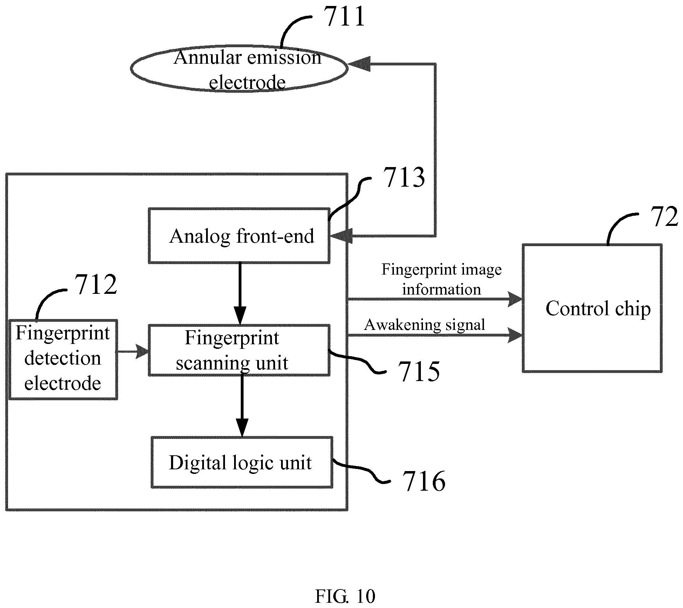

As illustrated in FIG. 10, the system for logging in to a terminal based on fingerprint identification in a standby state according to the second embodiment of the present invention is different from the first embodiment in that the fingerprint identification is implemented by the primary control chip 72, and a fingerprint scanning and detection module formed by the annular emission electrode 711, the fingerprint detection electrode 712, the analog front-end 713, the fingerprint scanning unit 715 and a digital logic unit 716, detects, in the standby state, whether a user performs a touch operation; upon detection of a touch operation performed by the user, enters a scanning mode to scan whether the user inputs fingerprint information; and if it is scanned that the user inputs fingerprint information, awakes the primary control chip and send the scanned fingerprint information to the primary control chip 72, and digitalizes the canned fingerprint information and send the fingerprint information to the primary control chip 72. Afterwards, the primary control chip 72 identifies the fingerprint information, and unlocks the terminal upon successful fingerprint identification, such that the user successfully logs in to the terminal.

The above login system may be a software unit, a hardware unit or a software-hardware hybrid unit built in a mobile phone, a tablet computer and the like terminal. The mobile terminal may include a display screen, a touch screen, a fingerprint scanning module/fingerprint scanning and identification module and a primary controller. The fingerprint scanning module/fingerprint scanning and identification module, in the standby state, enters a low power-consumption working mode instead of a sleep mode, and may scan or even identify the fingerprint once detecting a valid touch operation, thereby saving manual awaking before the scanning and identification function is enabled. In this way, user experience is improved.

It is understandable to those skilled in the art that all or partial steps of the method described in the above embodiments can be implemented by controlling relevant hardware by programs. The programs may be stored in a computer readable storage medium. The storage medium may be a read only memory (ROM), random access memory (RAM), a magnetic disk or a compact disc read-only memory (CD-ROM).

The above descriptions are merely preferred embodiments of the present invention, but not intended to limit the present invention. Any modification, equivalent replacement, and improvement made without departing from the principle of the present invention shall fall within the protection scope of the present invention.

## Claims

1. A method for logging into a terminal based on fingerprint identification in a standby state, **characterized in** comprising the following steps:
detecting periodically with a fingerprint scanning module (715) of the terminal whether a user performs a touch operation in the standby state, wherein the fingerprint scanning module (715) is in a low power-consumption mode in the standby state;
upon detection of a touch operation performed by a user, entering a scanning mode to scan whether the user inputs fingerprint information; and
if it is scanned that the user inputs fingerprint information, awaking a primary control chip (72) and sending the scanned fingerprint information to the primary control chip (72) to enable the primary control chip (72) to identify the fingerprint information, and unlock the terminal upon successful identification, such that the user successfully logs into the terminal.

2. The method for logging into a terminal based on fingerprint identification in a standby state according to claim 1, wherein detecting by a fingerprint scanning module (715) of the terminal whether a user performs a touch operation in a standby state comprises:
detecting by the fingerprint scanning module (715) of the terminal in the standby state whether the user performs the touch operation conforming to rules.

3. The method for logging into a terminal based on fingerprint identification in a standby state according to claim 2, wherein the touch operation conforming to rules comprises a tap operation, a long-press touch operation or a short-press double-tap operation.

4. The method for logging into a terminal based on fingerprint identification in a standby state according to claim 2, wherein if no touch operation conforming to rules is detected, the terminal enters a period of sleep time and temporarily stops detecting whether a user performs a touch operation in a standby state.

5. A system for logging into a terminal based on fingerprint identification in a standby state, **characterized in** comprising a fingerprint scanning module (715) and a primary control chip (72); wherein
the fingerprint scanning module (715) is configured to: periodically detect whether a user performs a touch operation in the standby state, wherein the fingerprint scanning module (715) is in a low power-consumption mode in the standby state; enter a scanning mode to scan whether the user inputs fingerprint information upon detection of a touch operation performed by the user; and awake the primary control chip (72) and send the scanned fingerprint information to the primary control chip (72) if it is scanned that the user inputs fingerprint information; and
the primary control chip (72) is configured to identify the fingerprint information, and unlock the terminal upon successful identification, such that the user successfully logs into the terminal.

6. The system for logging into a terminal based on fingerprint identification in a standby state according to claim 5, wherein the fingerprint scanning module (715) is further configured to, in the standby state, detect whether the user performs a touch operation conforming to rules.

7. The system for logging into a terminal based on fingerprint identification in a standby state according to claim 6, wherein the touch operation conforming to rules comprises a tap operation, a long-press touch operation or a short-press double-tap operation.

8. The system for logging into a terminal based on fingerprint identification in a standby state according to claim 6, wherein the fingerprint scanning module (715) is further configured to, if no touch operation conforming to rules is detected, enter a period of sleep time and temporarily stop the touch gesture detection step.

9. A terminal based on fingerprint identification, comprising the system as defined in any one of claims 5 to 8.

## Patentansprüche

1. Verfahren zum Einloggen in ein Terminal auf der Grundlage einer Fingerabdruckidentifikation in einem Bereitschaftszustand, **dadurch gekennzeichnet, dass** es die folgenden Schritte umfasst:
periodisches Erkennen mit einem Fingerabdruckabtastmodul (715) des Terminals, ob ein Benutzer im Bereitschaftszustand eine Berührungsoperation ausführt, wobei das Fingerabdruckabtastmodul (715) im Bereitschaftszustand in einem Modus mit geringem Stromverbrauch ist;
beim Erkennen einer von einem Benutzer ausgeführten Berührungsoperation in einen Scanmodus zu gehen, um zu scannen, ob der Benutzer Fingerabdruckinformationen eingibt; und
wenn gescannt wird, dass der Benutzer Fingerabdruckinformationen eingibt, Wecken eines primären Steuerchips (72) und Senden der gescannten Fingerabdruckinformationen an den primären Steuerchip (72), um den primären Steuerchip (72) in die Lage zu versetzen, die Fingerabdruckinformationen zu identifizieren und das Terminal nach erfolgreicher Identifizierung zu entsperren, so dass sich der Benutzer erfolgreich in das Terminal einloggt.

2. Verfahren zum Einloggen in ein Terminal auf der Grundlage einer Fingerabdruckidentifikation in einem Bereitschaftszustand nach Anspruch 1, wobei das Erkennen durch ein Fingerabdruckabtastmodul (715) des Terminals, ob ein Benutzer in einem Bereitschaftszustand eine Berührungsoperation ausführt, umfasst:
Erkennen durch das Fingerabdruckabtastmodul (715) des Terminals im Bereitschaftszustand, ob der Benutzer die Berührungsoperation regelkonform ausführt.

3. Verfahren zum Einloggen in ein Terminal auf der Grundlage einer Fingerabdruckidentifikation in einem Bereitschaftszustand nach Anspruch 2, wobei die regelkonforme Berührungsoperation eine Tippoperation, eine Langdruck-Berührungsoperation oder eine Kurzdruck-Doppeltippoperation umfasst.

4. Verfahren zum Einloggen in ein Terminal auf der Grundlage einer Fingerabdruckidentifikation in einem Bereitschaftszustand nach Anspruch 2, wobei, wenn keine regelkonforme Berührungsoperation erkannt wird, das Terminal in eine Schlafzeitperiode eintritt und vorübergehend aufhört zu erkennen, ob ein Benutzer eine Berührungsoperation in einem Bereitschaftszustand ausführt.

5. Ein System zum Einloggen in ein Terminal auf der Grundlage einer Fingerabdruckidentifikation in einem Bereitschaftszustand, **dadurch gekennzeichnet, dass** es ein Fingerabdruckabtastmodul (715) und einen primären Steuerchip (72) umfasst; wobei
das Fingerabdruckabtastmodul (715) konfiguriert ist, um: periodisch zu erfassen, ob ein Benutzer im Bereitschaftszustand eine Berührungsoperation ausführt, wobei das Fingerabdruckabtastmodul (715) im Bereitschaftszustand in einem Modus mit niedrigem Energieverbrauch ist; in einen Abtastmodus einzutreten, um zu scannen, ob der Benutzer Fingerabdruckinformationen bei Erfassung einer vom Benutzer ausgeführten Berührungsoperation eingibt; und den primären Steuerchip (72) zu wecken und die gescannten Fingerabdruckinformationen an den primären Steuerchip (72) zu senden, wenn gescannt wird, dass der Benutzer Fingerabdruckinformationen eingibt; und
der primäre Steuerchip (72) konfiguriert ist, um die Fingerabdruckinformationen zu identifizieren und das Terminal nach erfolgreicher Identifizierung zu entsperren, so dass sich der Benutzer erfolgreich in das Terminal einloggt.

6. System zum Einloggen in ein Terminal auf der Grundlage einer Fingerabdruckidentifikation in einem Bereitschaftszustand nach Anspruch 5, wobei das Fingerabdruckabtastmodul (715) ferner konfiguriert ist, um im Bereitschaftszustand zu erkennen, ob der Benutzer eine regelkonforme Berührungsoperation ausführt.

7. System zum Einloggen in ein Terminal auf der Grundlage einer Fingerabdruckidentifikation in einem Bereitschaftszustand nach Anspruch 6, wobei die regelkonforme Berührungsoperation eine Tippoperation, eine Langdruck-Berührungsoperation oder eine Kurzdruck-Doppeltippoperation umfasst.

8. System zum Einloggen in ein Terminal auf der Grundlage der FingerabdruckIdentifikation in einem Bereitschaftszustand nach Anspruch 6, wobei das Fingerabdruckabtastmodul (715) ferner konfiguriert ist, um, wenn keine regelkonforme Berührungsoperation erkannt wird, eine Schlafzeitperiode einzutreten und den Schritt der Erkennung von Berührungsgesten vorübergehend zu stoppen.

9. Ein auf Fingerabdruckidentifikation basierendes Terminal, das das in einem der Ansprüche 5 bis 8 definierte System umfasst.

## Revendications

1. Procédé de connexion à un terminal sur la base d'identification d'empreinte digitale dans un état de veille, **caractérisé en ce qu'**il comprend les étapes suivantes:
détecter périodiquement par un module de balayage d'empreinte digitale (715) du terminal si un utilisateur effectue une opération tactile dans l'état de veille, le module de balayage d'empreinte digitale (715) étant dans un mode à faible consommation d'énergie dans l'état de veille;
lors de la détection d'une opération tactile effectuée par un utilisateur, entrer dans un mode de balayage pour balayer si l'utilisateur entre des informations d'empreinte digital; et
s'il est balayé que l'utilisateur entre des informations d'empreinte digital, réveiller une puce de commande principale (72) et envoyer les informations d'empreinte digitale balayéesà la puce de commande principale (72) pour permettre à la puce de commande principale (72) d'identifier les informations d'empreinte digitale et de les déverrouiller le terminal lors d'une identification réussie, de sorte que l'utilisateur se connecte avec succès au terminal.

2. Procédé de connexion à un terminal sur la base d'une identification d'empreinte digitale dans un état de veille selon la revendication 1, dans lequel la détection par un module de balayage d'empreinte digitale (715) du terminal si un utilisateur effectue une opération tactile dans un état de veille comprend:
détecter par le module de balayage d'empreinte digitale (715) du terminal dans l'état de veille si l'utilisateur effectue l'opération tactile conformeaux règles.

3. Procédé de connexion à un terminal sur la base d'une identification d'empreinte digitale dans un état de veille selon la revendication 2, dans lequel l'opération tactile conforme aux règles comprend une opération de clic, une opération tactile de pression longue ou une opération de double clic de pression courte.

4. Procédé de connexion à un terminal sur la base de l'identification d'empreinte digitale dans un état de veille selon la revendication 2, dans lequel si aucune opération tactile conforme aux règles n'est détectée, le terminal entre dans une période de sommeil et arrête temporairement de détecter si un utilisateur effectue uneopération tactile dans l'état de veille.

5. Système de connexion à un terminal sur la based'identification d'empreinte digitale dans un état de veille, **caractérisé en ce qu'**il comprend un module de balayage d'empreinte digitale (715) et une puce de commande principale (72); dans lequel
le module de balayage d'empreinte digitale (715) est configuré pour: détecter périodiquement si un utilisateur effectue une opération tactile dans l'état de veille, le module de balayage d'empreinte digitale (715) étant dans un mode à faible consommation d'énergie dans l'état de veille; entrer dans un mode de balayage pour balayer si l'utilisateur entre des informations d'empreinte digitale lors de la détection d'une opération tactile effectuée par l'utilisateur; et réveiller la puce de commande principale (72) et envoyer les informations d'empreinte digitale balayées à la puce de commande principale (72) s'il est balayé que l'utilisateur entre des informations d'empreinte digital; et
la puce de commande principale (72) est configurée pour identifier les informations d'empreinte digitale et déverrouiller le terminal lors d'une identification réussie, de sorte que l'utilisateur se connecte avec succès au terminal.

6. Système de connexion à un terminal sur la based'identification d'empreinte digitale dans un état de veille selon la revendication 5, dans lequel le module de balayage d'empreinte digitale (715) est en outre configuré pour, dans l'état de veille, détecter si l'utilisateur effectue une opération tactile conforme à règles.

7. Système de connexion à un terminal sur la base d'une identification d'empreinte digitale dans un état de veille selon la revendication 6, dans lequel l'opération tactile conforme aux règles comprend une opération de clic, une opération tactile de pression longue ou une opération de double clic de pression courte.

8. Système de connexion à un terminal sur la based'identification d'empreinte digitale dans un état de veille selon la revendication 6, dans lequel le module de balayage d'empreinte digitale (715) est en outre configuré pour, si aucune opération tactile conforme aux règles n'est détectée, entrer dans une période de sommeil et arrêter temporairement l'étape de détection du geste tactile.

9. Terminal sur la based'identification d'empreinte digital, comprenant le système tel que défini dans l'une quelconque des revendications 5 à 8.
